# EUROPEAN PATENT APPLICATION

(11) **EP 4 834 518 A1**
(43) Date of publication of application: **04.11.2026**
(21) Application number: 26175297.6
(22) Date of filing: 29.04.2026
(51) Int. Cl.: B23K 26/21, B23K 26/064

(54) **ADJUSTABLE LASER LENS CARRIER**

(30) Priority: 30.04.2025 US 202563797466 P
(71) Applicant: Flex-N-Gate Advanced Product Development, LLC, Windsor, ON N9A 5K3 (CA)
(72) Inventor: FOSTER, Brian, WARREN (US); DINGESS, Jeffrey, ALLEN PARK (US); DEBOODT, Zach, ALLEN PARK (US)
(74) Representative: Lavoix

(57) **Abstract**

An adjustable lens carrier (100) includes a waveguide (102) having an opening (104). The waveguide (102) is configured to receive laser energy from a laser source; said laser energy is directed through the opening of the waveguide (102) at a first entry angle. The adjustable lens carrier (100) includes a bracket (110) connected to the waveguide (102) at a first fastener face (116A) and a second fastener face (116B) opposite the first fastener face (116A). The lens carrier (100) also includes a pair of adjustment arms (112), with each adjustment arm (112) being pivotally coupled to the bracket (110). The adjustable lens carrier (100) is configured such that a movement of at least one adjustment arm (112) causes laser energy to be directed through the opening of the waveguide (102) at a second entry angle, with the second entry angle being different than the first entry angle.

## Description

### BACKGROUND OF THE INVENTION

### Technical Field

The disclosed embodiments relate generally to the field of laser welding. More specifically, the disclosed embodiments relate to an adjustable lens carrier for redirecting laser energy in laser welding applications.

### SUMMARY OF THE INVENTION

The following presents a simplified summary of the invention in order to provide a basic understanding of some aspects of the invention. This summary is not an extensive overview of the invention. It is not intended to identify critical elements of the invention or to delineate the scope of the invention. Its sole purpose is to present some concepts of the invention in a simplified form as a prelude to the more detailed description that is presented elsewhere herein.

According to an embodiment, an adjustable lens carrier includes a waveguide having an opening. The waveguide is configured to receive laser energy from a laser source; said laser energy is directed through the opening of the waveguide at a first entry angle. The adjustable lens carrier includes a bracket connected to the waveguide at a first fastener face and a second fastener face opposite the first fastener face. The lens carrier also includes a pair of adjustment arms, with each adjustment arm being pivotally coupled to the bracket. The adjustable lens carrier is configured such that a movement of at least one adjustment arm causes laser energy to be directed through the opening of the waveguide at a second entry angle, with the second entry angle being different than the first entry angle.

In some embodiments, the adjustable lens carrier includes a lens. In further embodiments, the lens is disposed at a bottom portion of the waveguide such that laser energy is directed through the waveguide prior to passing through the lens. In some embodiments, the lens is configured to direct laser energy to laser weld two or more components together.

In some embodiments, the bracket comprises an arcuate segment extending between the first fastening face and the second fastening face.

In some embodiments, each adjustment arm of the pair of adjustment arms includes a slot extending through a thickness thereof, the slot extending from an end of said adjustment arm at least partially along the length. In further embodiments, the bracket comprises an arcuate segment extending between the first fastening face and the second fastening face, the arcuate segment extending at least partially into the slot disposed on each adjustment arm.

In some embodiments, an end portion of at least one adjustment arm of the pair of adjustment arms is connected to an actuator. In further embodiments, the actuator is selected from a group consisting of: a servo motor and a stepper motor.

In some embodiments, the difference between the first entry angle and the second entry angle is between 0.25 degrees and 1 degree.

In some embodiments, the adjustable lens carrier includes a second bracket connected to the waveguide at a first fastener face and a second fastener face opposite the first fastener face, the second bracket being connected to an opposite side of the waveguide to the first bracket. The adjustable lens carrier also includes a second pair of adjustment arms, each adjustment arm of said pair of adjustment arms being pivotally coupled to the second bracket.

In further embodiments, the adjustable lens carrier includes a plurality of laser sources, each laser source being configured to direct laser energy through the opening of the waveguide.

In still further embodiments, the adjustable lens carrier includes a first actuator connected to at least one arm of the first pair of adjustment arms, and a second actuator connected to at least one arm of the second pair of adjustment arms.

According to another embodiment, a method of directing laser energy through a lens includes providing a source of laser energy and a waveguide having a lens, with the waveguide being pivotally connected to a pair of adjustment arms such that movement of at least one adjustment arm results in a rotational movement of the waveguide. The method includes directing laser energy from the source of laser energy into an opening of the waveguide at a first entry angle. The method further includes moving at least one adjustment arm to rotate the waveguide such that the laser energy is directed through the opening of the waveguide at a second entry angle different from the first entry angle.

In some embodiments, the method further includes directing the laser energy through the lens to weld two or more components together

### BRIEF DESCRIPTION OF THE DRAWINGS

Illustrative embodiments are described in detail below with reference to the attached drawing figures, which are incorporated by reference herein and wherein:
FIG. 1 is a perspective view of an adjustable laser lens carrier according to a first embodiment of the disclosure;
FIG. 2 is a front view of the adjustable laser lens carrier of FIG. 1;
FIG. 3 is a side view of the adjustable laser lens carrier of FIG. 1;
FIG. 4 is a is a perspective view of a bracket forming part of the adjustable laser lens carrier of FIG. 1;
FIG. 5 is a top view of the adjustable laser lens carrier of FIG. 1;
FIG. 6 is a perspective view of an adjustable laser lens carrier according to a second embodiment of the disclosure;
FIG. 7 is a method flow diagram for using the adjustable laser lens carriers of FIGs. 1 and 6;
FIG. 8 is a method flow diagram for manufacturing the adjustable laser lens carriers of FIGs. 1 and 6;
FIG. 9 is a bottom perspective view of the adjustable laser lens carrier of FIG. 1; and
FIG. 10 is a bottom perspective view of the adjustable laser lens carrier of FIG. 6.

The drawing figures do not limit the invention to the specific embodiments disclosed and described herein. The drawings are not necessarily to scale, emphasis instead being placed upon clearly illustrating the principles of the invention.

### DETAILED DESCRIPTION

The following detailed description references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the invention. The following detailed description is, therefore, not to be taken in a limiting sense. The scope of the invention is defined only by the appended claims, along with the full scope of equivalents to which such claims are entitled.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the technology can include a variety of combinations and/or integrations of the embodiments described herein.

Embodiments disclosed herein provide a system and a method for an adjustable laser lens carrier for use in laser welding in which materials (e.g., thermoplastics) are partially melted with laser energy for bonding components together. In embodiments, the adjustable laser lens carrier includes a waveguide for receiving and transmitting laser energy from a laser source. In current arrangements, positioning of laser sources lack adjustability, which means that a direction of laser energy lacks adjustability once a laser emitting tool is established. Additionally, waveguides in current arrangements may be used to direct laser energy from the laser sources, but the waveguides also lack adjustability. In current arrangements, lacking the ability to adjust the direction of laser energy emitted is disadvantageous because variation among components cannot be accounted for leading to misalignment between the waveguide and the component. Misalignments may be due to slight variations in the component being welded, for example due to tolerance variation among parts within a batch or between parts from different batches.

Additionally, current waveguides may not be configured to support a lens. A lens may be advantageous for welding materials together because a lens may be configured to redirect, focus, or concentrate laser energy for welding processes. A solution is needed which supports a lens in the waveguide and makes the waveguide adjustable so that the waveguide may be adjusted to properly align with a component for welding. Embodiments of the present disclosure disclose an adjustable laser lens carrier.

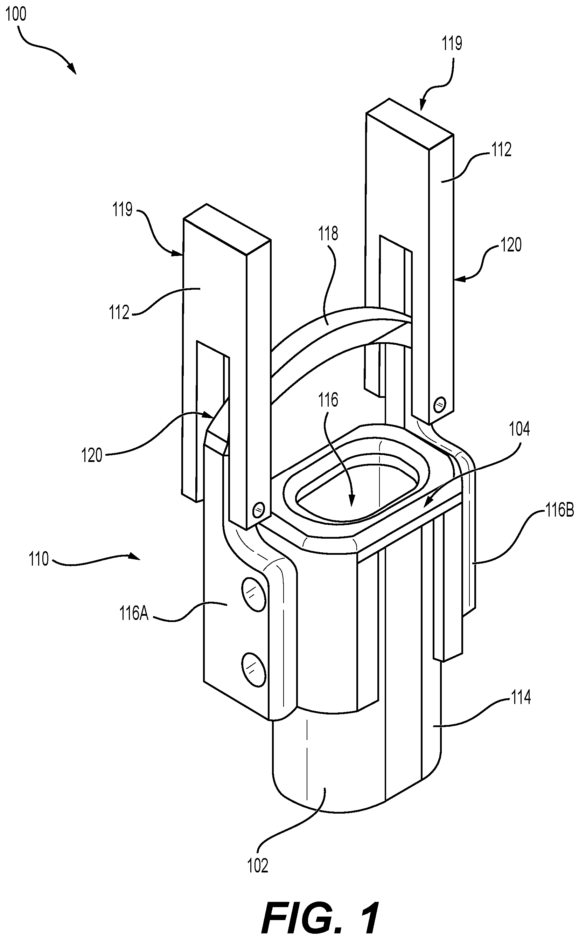

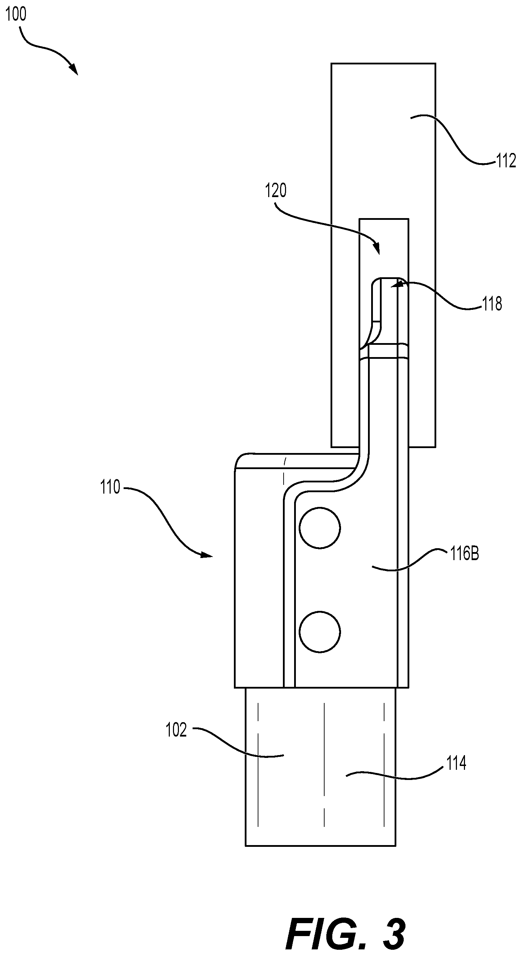

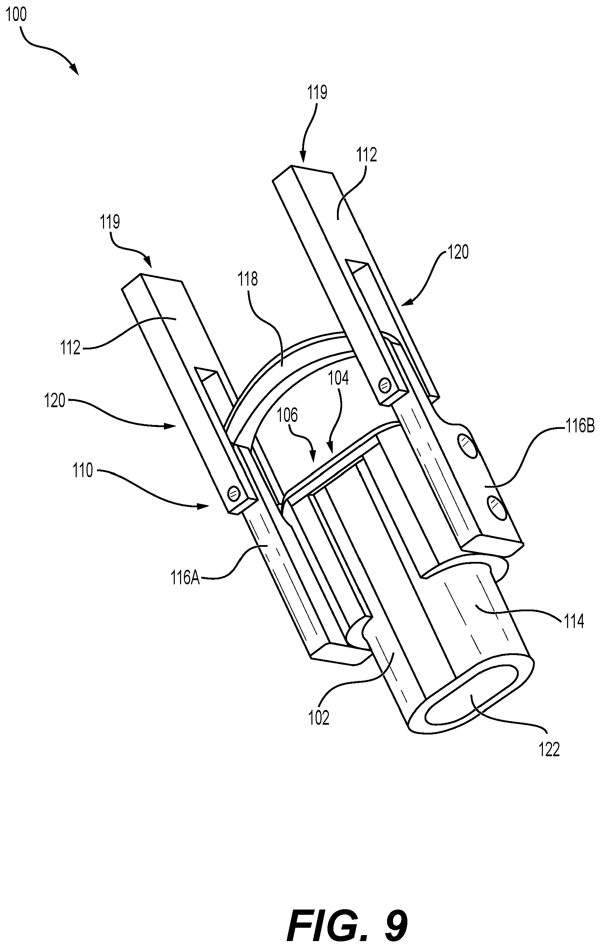

With reference to FIGs. 1-8, an adjustable laser lens carrier 100 is shown and described. In embodiments, the adjustable laser lens carrier 100 comprises a waveguide 102. The waveguide 102 has an opening 104 which leads to a chamber 106. In some embodiments, the waveguide 102 is configured to receive laser energy through the chamber 106 from a laser source (not shown). The waveguide 102 is configured to support a lens 122 which is disposed within the chamber 106 (see FIG. 9). A bracket 110 is connected to an outer shell 114 of the waveguide 102, and the bracket 110 is pivotally coupled to a pair of adjustment arms 112. Generally, linear movement (i.e., translation) of at least one arm 112 of the pair of adjustment arms 112 causes a rotational movement of the bracket 110 and waveguide 102. In this way, a rotational or pivoting movement of the waveguide 102 aligns the laser source with the lens, thereby altering a path of laser energy directed to a component to be welded.

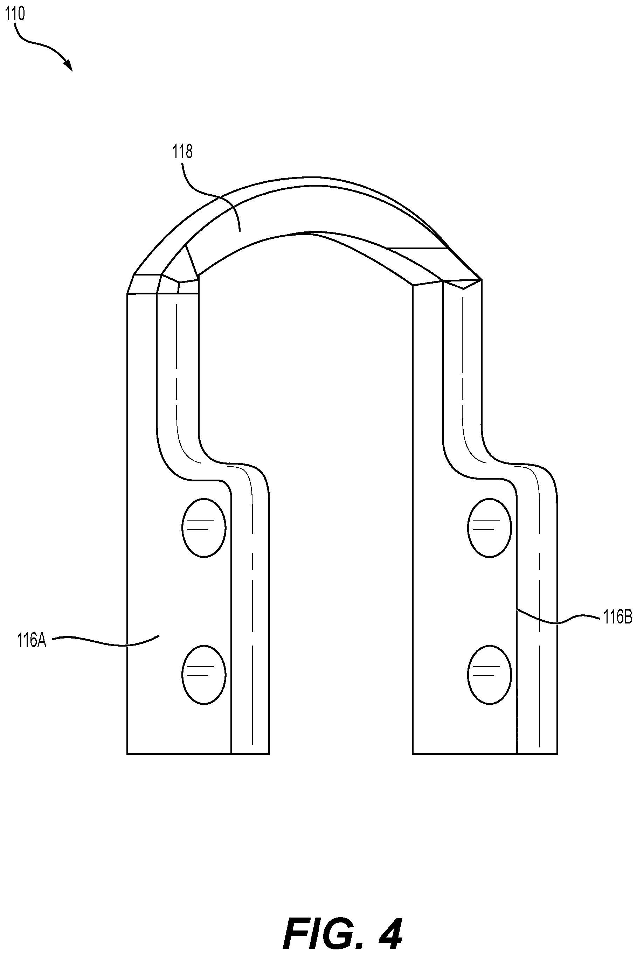

With reference to FIGs. 1, 3, and 4, the bracket 110 mounts or is connected to an outer shell 114 of the waveguide 102. In embodiments, the bracket 110 includes a first fastener face 116A and a second fastener face 116B (see FIG. 4). The first fastener face 116A is configured to connect to a portion of the outer shell 114 opposite the second fastener face 116B. In embodiments, fasteners may be inserted through the first fastener face 116A and second fastener face 116B to effectively mount the bracket 110 to the waveguide 102. In embodiments, from each of the fastener faces 116A and 116B the bracket extends upwards to an arcuate segment or curved arm 118. The curved arm 118 has an arc-like shape which spans between the first fastener face 116A and the second fastener face 116B thereby connecting the first and second faces 116A and 116B. The curved arm 118 has a radius of curvature which causes the center of the curved arm to extend outward and away from the waveguide 102 when the bracket 110 is mounted to the waveguide 102.

With reference to FIGs. 1-3, the pair of adjustment arms 112 are each pivotally coupled to the bracket 110 substantially in between the curved arm 118 and respective fastener face 116A/116B. Each of the arms 112 includes a slot 120 which extends from an end of each of the arms 112 and then terminates substantially near the center of each arm 112. The slot 120 generally extends through the entire thickness of its respective adjustment arm 112, and extends at least partially along the length of said adjustment arm. In embodiments, opposing ends of the curved arm 118 slide into the slots 120 of each arm when the bracket 110 is pivotally coupled to the adjustment arms 112. The length of each slot 120 in each arm is such that the outermost portion of the curved arm 118 does not extend beyond the length of the slots when the bracket 110 is coupled to the adjustment arms 112. In embodiments, the pivotal coupling of the ends of the curved arm 118 into the slots 120 of arms 112 allows for the bracket 110 to pivot and be tiltable independent of the adjustment arms 112. The pivotal coupling of the curved arm 118 into the slots 120 allows for the bracket 110 to pivot substantially in a single plane (e.g., forward and back) and prevents the bracket 110 from pivoting left and right. End portions 119 of the adjustment arms 112 may be configured to attach to a laser source and/or an actuator configured to selectively control the position and/or rotation of the waveguide 102. The actuator may be configured to move one or both of the adjustment arms 112 in order to selectively pivot or tilt the waveguide 102.

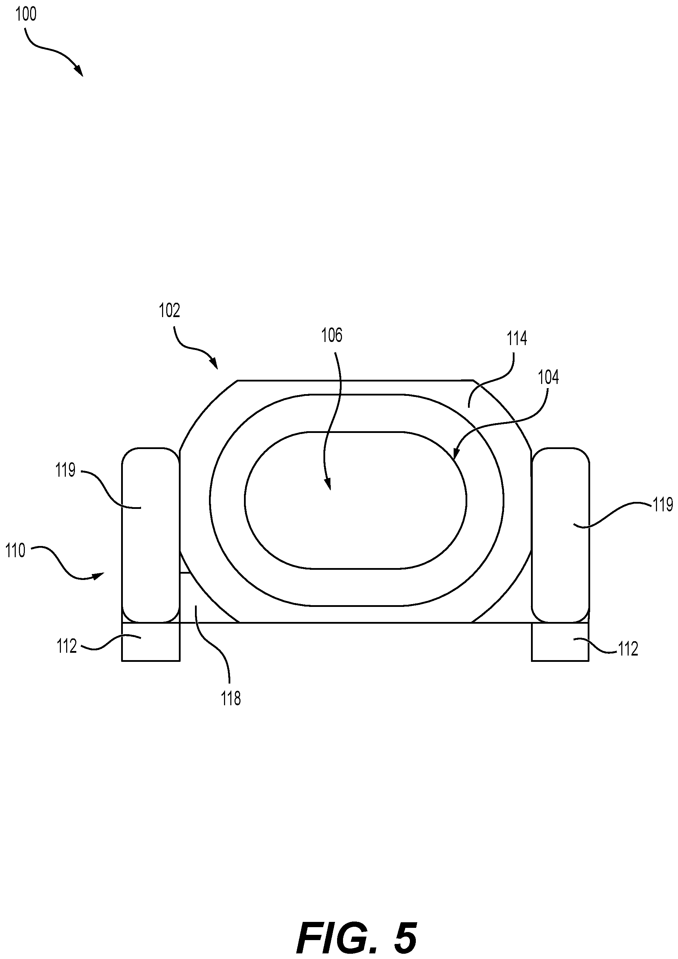

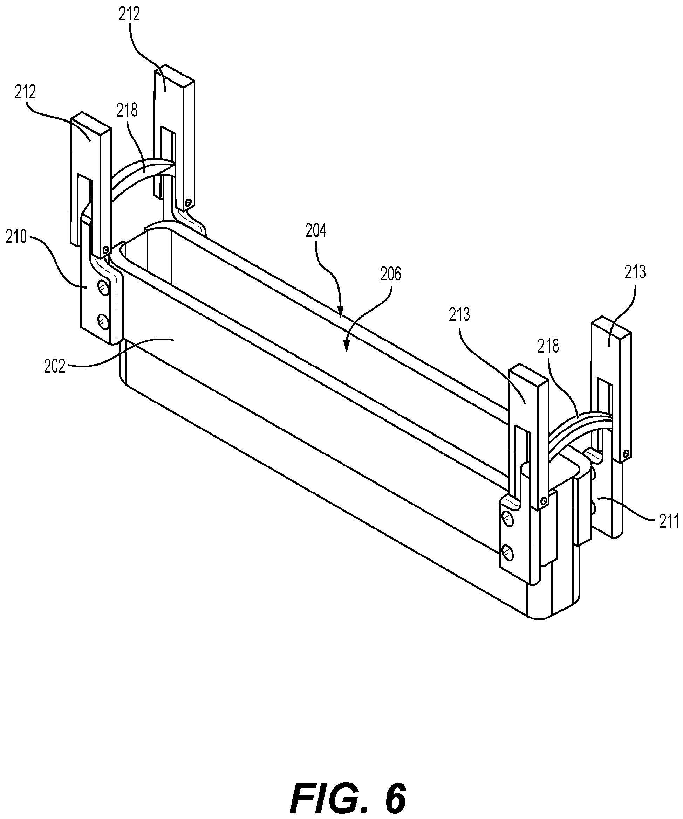

With reference to FIGs. 1 and 5, the waveguide 102 is shaped with the opening 104 and the chamber 106 being circular or slightly ovular or oblong. One of skill in the art will understand that the shape(s) of the opening 104 and chamber 106 in the illustrated embodiment are exemplary in nature and are not intended to be limiting. In other embodiments not shown, the opening 104 and/or the chamber 106 may have any number of shapes without departing from the scope of the disclosure. In embodiments, the opening 104 may be sized and configured based on a laser source. The fastener faces 116A/116B are fastened onto opposing sides of the outer shell 114 of waveguide 102. The first fastener face 116A and 116B are shaped such that the curved arm 118 which extends upwards from each of the faces 116A and 116B is positioned over an outer edge of the opening 104. This may be advantageous so that the curved arm 118 does not interfere with laser energy being directed towards the waveguide 102 and into the opening 104 and chamber 106. With reference to FIG. 9, the waveguide 102 includes a lens 122. The waveguide 102 is configured to support the lens 122 within the chamber 106. In embodiments, the lens 122 may be disposed at substantially a bottom portion of the waveguide 102. This allows for laser energy to pass through the opening 104, into the chamber 106, through the lens 122, and then be directed out of the waveguide 102. The lens 122 may be configured to redirect or alter the laser energy passing through the lens. In some embodiments, the lens 122 may focus or dissipate the laser energy. In embodiments, the waveguide 102 is shown to receive laser energy from a single ferrule, but in other embodiments any number of ferrules may be configured to direct laser energy to the waveguide (see FIG. 6).

In embodiments, the adjustable laser lens carrier 100 is configured to be positioned substantially in the path of a laser source which directs laser energy through the lens 122 in the waveguide 102. In embodiments, each of the upper portions of the adjustment arms 112 may attach to the laser source and/or an actuator, such that laser energy may be directed from the laser source and through a ferrule to the waveguide 102 and lens 122. In some arrangements, when laser energy is passed through lens 122, the laser energy may be substantially redirected and altered. Once the laser energy passes through the lens 122, the laser energy may be used to weld one or more materials together. In embodiments, the adjustable laser lens carrier 100 and adjustment arms 112 allow for the waveguide 102 to be adjusted to alter an entry and exit point of the laser energy emitted from the laser source. The lens 122 may be configured to redirect, focus, or concentrate laser energy when the energy passes through the lens 122. This may be advantageous for welding of differently sized parts and components (e.g., components having tolerance variation due to their method of manufacture, such as injection molding). In some embodiments, the laser energy is delivered to the materials to be welded at substantially the same time to provide simultaneous laser welding.

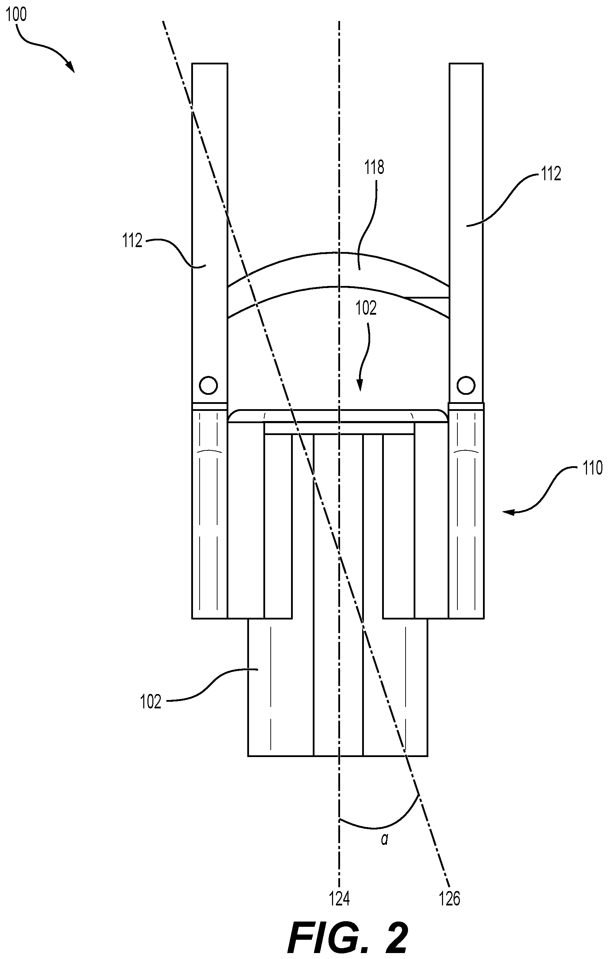

In operation, the adjustable laser lens carrier 100 may be positioned in the path of a laser source and may be attached to an actuator. The actuator may move the adjustment arms 112 to pivot and tilt the waveguide 102 relative to the laser source and the path of emitted laser energy. The actuator may be any type of linear or rotary actuator now known or later developed, including a servo motor having a servo drive, a stepper motor, or another type of actuator configured to link to and move the adjustment arms 112. The actuator may be controlled autonomously via a programmable control system or manually via operator control. More specifically, with reference to FIG. 2, the pivotal coupling between the adjustment arms 112 and the curved arm 118 of the bracket 110 mounted to the waveguide 102 allows for the waveguide to pivot/tilt relative to the stationary laser source. Tilting or pivoting of the waveguide 102 relative to the laser source substantially alters the entry angle of the laser energy (i.e. angle of entry into the opening 104) and alters the exit angle of the laser energy (i.e. exit angle through the lens 122). As shown in FIG. 2, when the waveguide 102 is not tilted, the waveguide 102 may be substantially aligned with (as illustrated, perpendicular to) the longitudinal reference guideline 124. In embodiments, when the waveguide 102 is tilted, the waveguide 102 may be substantially aligned with or perpendicular to the secondary guideline 126. In FIG. 2, secondary guideline 126 is angularly offset from longitudinal reference guideline 124 in a first direction, although one of skill in the art will understand that in other embodiments and applications secondary guideline 126 could be tilted in an opposite direction relative to longitudinal reference guideline 124 without departing from the scope hereof. The angular offset between the longitudinal reference guideline 124 and the secondary guideline (i.e., the difference between a first entry angle and a second entry angle), angle α, 126 is exaggerated in FIG. 2 for clarity of illustration. In embodiments, the waveguide 102 may be tilted or aligned at any position along the curve of the curved arm 118 and the guidelines 124 and 126 should not be considered limiting to the tilt/pivot of the waveguide 102 herein.

Generally, the difference between the first entry angle and the second entry angle is achieved through movement (e.g., linear translation) of one or both of the adjustment arms 112. In one example, this differential angle α may be achieved by moving one of the arms 112 upward (with reference to the orientation shown in FIG. 2) while simultaneously moving the other adjustment arm 112 downward to pivot/tilt the waveguide 102 and alter the angle of entry of the laser energy into the waveguide 102. In some embodiments, the maximum angle α that waveguide 102 is configured to tilt will be dependent on the distance between the waveguide 102 and the laser source. In some embodiments, the angle α that waveguide 102 is configured to tilt will be in a range of approximately 0.25 degrees to 1 degree, in any direction. One of skill in the art will understand that in other embodiments the angle α may be less than 0.25 degrees, and/or in other embodiments the angle α may exceed 1 degree without departing from the scope of the disclosure. In some embodiments, the pivot/tilt of the waveguide 102 may be determined based on a pyramid effect. For instance, if the waveguide 102 is pivoted a half-millimeter, the point of exit for the laser energy passing through the lens 122 may be one-and-a-half millimeters.

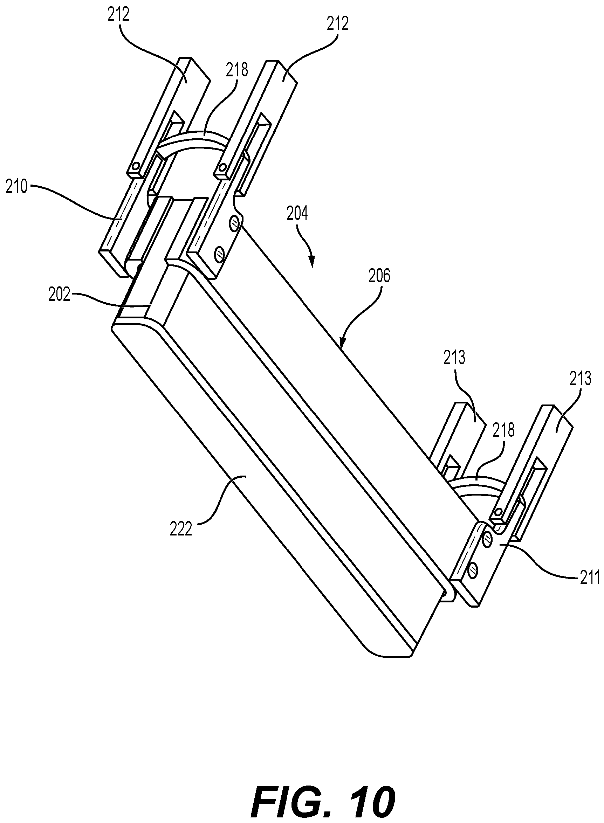

In embodiments, with reference to FIG. 6, the waveguide 202 is shown. The waveguide 202 has similar function to waveguide 102 and is configured to receive laser energy from a laser source. In embodiments, the waveguide 202 includes an opening 204 and a chamber 206 such that laser energy is directed into the opening 204 and into the chamber 206. A lens 222 (see FIG. 10) is supported within the chamber 206 and may be disposed at a bottom portion of the waveguide 202. In embodiments, the waveguide 202 is shown to receive laser energy in ten ferrules, but in other embodiments any number of ferrules may be configured to direct laser energy to the waveguide 202. In some embodiments, the waveguide 202 may be appropriately lengthened or shortened to accommodate any number of ferrules depending on the specific requirements of the application.

In some embodiments, such as that shown in FIGs. 6 and 10, the waveguide 202 may be sufficiently large enough to require more than one bracket 110. For example, in the illustrated embodiment, a first bracket 210 is mounted to a first end of the waveguide 202, while a second bracket 211 is mounted to an opposing end of the waveguide 202. Each bracket 210, 211 is substantially similar or identical to bracket 110 in structure and function as bracket 110 shown and described above. For example, each bracket 210, 211 includes an arcuate segment 218 which curves outward and away from the waveguide 202. The first bracket 210 is pivotally connected to a first pair of adjustment arms 212, and the second bracket 211 is pivotally connected to a second pair of adjustment arms 213. The first and second pairs of adjustment arms 212 and 213, respectively, are structurally and functionally identical to the pair of adjustment arms 112 described above.

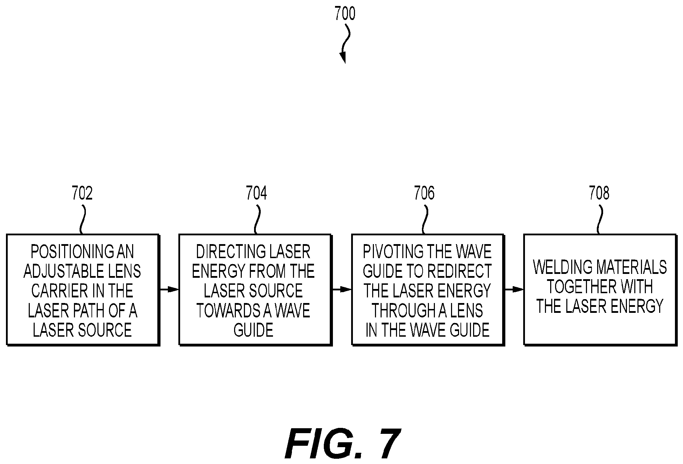

FIG. 7 shows a method 700 for using an adjustable lens carrier, such as adjustable lens carrier 100. A first step 702 comprises positioning an adjustable laser lens carrier in the laser path of a laser source. In an example of step 702, the adjustable laser lens carrier 100 may be attached to a laser source and/or the adjustable laser lens carrier 100 may be attached to an actuator (e.g., a servo) using adjustment arms 112 which include upper portions 119 for attaching to said laser source or actuating device. The actuator may position the adjustable laser lens carrier 100 in the laser path of the laser source. In another example of step 702, waveguide 202 is operably coupled to a plurality of laser sources (e.g., see FIG. 6) and one or more actuators are used to adjust the position of the adjustable laser lens carrier 100 in the paths of the laser sources.

A step 704 comprises directing laser energy from the laser source/plurality of laser sources towards a waveguide of the adjustable laser lens carrier. For instance, the waveguide 102 or 202 may be configured to receive laser energy from the laser source/plurality of laser sources. More specifically, laser energy may enter through the opening 104/204 and pass into the chamber 106/206. In embodiments, the adjustable laser lens carrier 100 and waveguide 102/202 is substantially aligned with the laser source/plurality of laser sources when the adjustment arms 112 are attached to the laser source or motor actuated device.

A step 706 comprises pivoting the waveguide to redirect the laser energy through a lens in the waveguide. For instance, the waveguide 102/202 may be configured to support lens 122/222 such that laser energy entering the waveguide 102/202 may be passed through the lens 122/222. In embodiments, the waveguide 102/202 may be tilted relative to the adjustment arms 112 and laser source/plurality of laser sources such that the laser energy may be redirected or altered when the energy passes through one of the respective lens 122/222. The waveguide 102/202 may be pivoted/tilted when the actuator moves the adjustment arms 112. For instance, with reference to FIG. 2, the adjustment arms 112 may be moved or pivoted so that the waveguide 102/202 pivots from being substantially aligned with the guideline 124 to being substantially aligned with the guideline 126. In this way, the adjustment arms 112 may be repositioned along the curvature of the curved arm 118 and the waveguide 102/202 pivoted or tilted.

A step 708 comprises welding materials together with the laser energy emitted from the laser source/plurality of laser sources. In embodiments, the laser energy may be emitted from the laser source/plurality of laser sources and directed into the waveguide 102/202 and through the lens 122/222. After the laser energy passes through a respective lens 122/222, the laser energy may be substantially altered and/or redirected. The altered/redirected laser energy may be used to weld one or more materials together. In some embodiments, parts having various sizes and shapes may be welded together using the adjustable laser lens carrier 100 due to the adjustable waveguide 102/202 and the lens 122/222 which allows for laser energy to be altered and redirected for welding purposes.

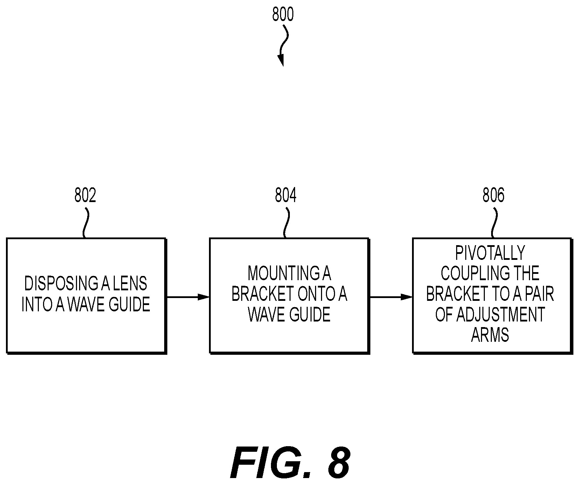

FIG. 8 shows a method 800 for manufacturing an adjustable lens carrier.

A step 802 comprises disposing a lens into a waveguide. In embodiments, the lens 122 may be disposed into the waveguide 102 and the lens 222 may be disposed into the waveguide 202. The lens 122/222 may be supported in a bottom portion of each of the respective waveguides 102/202. In some embodiments, the lens 122/222 may be wrapped into the waveguide 102/202 and in other embodiments the lens 122/222 may be dropped into the waveguide 102/222.

A step 804 comprises mounting a bracket onto the waveguide. In embodiments the bracket 110 may be mounted onto the waveguide 102/202. The bracket 110 includes curved arm 118 which extends above an outer edge of the waveguide 102/202.

A step 806 comprises pivotally coupling the bracket to a pair of adjustment arms. In embodiments the bracket 110 is pivotally coupled to the adjustment arms 112. The adjustment arms may be pivotally coupled to a curved arm 118 of the bracket 110 such that the curved arm slides within a slot 120 formed into each of the arms 112.

Many different arrangements of the various components depicted, as well as components not shown, are possible without departing from the spirit and scope of what is claimed herein. Embodiments have been described with the intent to be illustrative rather than restrictive. Alternative embodiments will become apparent to those skilled in the art that do not depart from what is disclosed. A skilled artisan may develop alternative means of implementing the aforementioned improvements without departing from what is claimed.

It will be understood that certain features and subcombinations are of utility and may be employed without reference to other features and subcombinations and are contemplated within the scope of the claims. Not all steps listed in the various figures need be carried out in the specific order described.

## Claims

1. An adjustable lens carrier comprising:
a waveguide having an opening and being configured to receive laser energy from a laser source, wherein said laser energy is directed through the opening at a first entry angle;
a bracket connected to the waveguide at a first fastener face and a second fastener face opposite the first fastener face; and
a pair of adjustment arms, each adjustment arm being pivotally coupled to the bracket;
wherein a movement of at least one adjustment arm of the pair of adjustment arms causes laser energy to be directed through the opening of the waveguide at a second entry angle, the second entry angle being different than the first entry angle.

2. The adjustable lens carrier of claim 1, further comprising a lens.

3. The adjustable lens carrier of claim 2, wherein the lens is disposed at a bottom portion of the waveguide such that laser energy is directed through the waveguide prior to passing through the lens.

4. The adjustable lens carrier of claim 2 or claim 3, wherein the lens is configured to direct laser energy to laser weld two or more components together.

5. The adjustable lens carrier of any one of claims 1 to 4, wherein the bracket comprises an arcuate segment extending between the first fastening face and the second fastening face.

6. The adjustable lens carrier of any one of claims 1 to 5, wherein each adjustment arm of the pair of adjustment arms includes a slot extending through a thickness thereof, the slot extending from an end of said adjustment arm at least partially along a length thereof.

7. The adjustable lens carrier of claim 6, wherein the bracket comprises an arcuate segment extending between the first fastening face and the second fastening face, the arcuate segment extending at least partially into the slot disposed on each adjustment arm.

8. The adjustable lens carrier of any one of claims 1 to 7, wherein an end portion of at least one adjustment arm of the pair of adjustment arms is connected to an actuator.

9. The adjustable lens carrier of claim 8, wherein the actuator is selected from the group consisting of: a servo motor and a stepper motor.

10. The adjustable lens carrier of any one of claims 1 to 9, wherein the difference between the first entry angle and the second entry angle is between 0.25 degrees and 1 degree.

11. The adjustable lens carrier of any one of claims 1 to 10, further comprising:
a second bracket connected to the waveguide at a first fastener face and a second fastener face opposite the first fastener face, the second bracket being connected to an opposite side of the waveguide to the first bracket; and
a second pair of adjustment arms, each adjustment arm of said pair of adjustment arms being pivotally coupled to the second bracket.

12. The adjustable lens carrier of claim 11, further comprising a plurality of laser sources, each laser source being configured to direct laser energy through the opening of the waveguide.

13. The adjustable lens carrier of claim 11 or claim 12, further comprising:
a first actuator connected to at least one arm of the first pair of adjustment arms; and
a second actuator connected to at least one arm of the second pair of adjustment arms.

14. A method of directing laser energy through a lens, the method comprising:
providing a source of laser energy and a waveguide having a lens, the waveguide being pivotally connected to a pair of adjustment arms such that movement of at least one adjustment arm causes a rotational movement of the waveguide;
directing laser energy from the source of laser energy into an opening of the waveguide at a first entry angle; and
moving at least one adjustment arm to rotate the waveguide such that the laser energy is directed through the opening of the waveguide at a second entry angle different from the first entry angle.

15. The method according to claim 14, further comprising directing the laser energy through the lens to weld two or more components together.
